# EUROPÄISCHE PATENTANMELDUNG

(11) **EP 1 905 300 A1**
(43) Veröffentlichungstag der Anmeldung: **02.04.2008**
(21) Anmeldenummer: 06020676.0
(22) Anmeldetag: 30.09.2006
(51) Int. Cl.: A01N 25/04, A01N 25/14, A01N 25/30, A01N 37/50, A01N 41/10, A01N 43/40, A01N 43/56, A01N 43/653, A01N 47/02, A01N 47/06, A01N 47/36, A01N 47/38, A01N 51/00

(54) **Wasser dispergierbare agrochemische Formulierungen enthaltend Polyalkoxytriglyzeride als Penetrationsförderer**

(71) Anmelder: Bayer CropScience AG, 40789 Monheim (DE)
(72) Erfinder: Vermeer, Ronald, 51371 Leverkusen (DE); Baur, Peter, Prof. Dr., 86938 Schondorf (DE)

(57) **Zusammenfassung**

Die vorliegende Erfindung betrifft neue, im Wasser dispergierbare agrochemische Formulierungen wie zum Beispiel wasserbasierende Suspensionskonzentrate und wasserdispergierbare Granulate von agrochemische Wirkstoffen enthaltend einen Penetrationsförderer aus der Klasse der Polyalkoxytriglyzeride, ein Verfahren zur Herstellung dieser Formulierungen und deren Verwendung zur Applikation der enthaltenen Wirkstoffe.

## Beschreibung

Die vorliegende Erfindung betrifft neue, im Wasser dispergierbare agrochemische Formulierungen wie zum Beispiel wasserbasierende Suspensionskonzentrate und wasserdispergierbare Granulate von agrochemische Wirkstoffen, ein Verfahren zur Herstellung dieser Formulierungen und deren Verwendung zur Applikation der enthaltenen Wirkstoffe.

Systemische agrochemische Wirkstoffe, insbesondere systemische Insektizide und Fungizide, brauchen zur Entfaltung der biologischen Wirkung eine Formulierung, welche es ermöglicht, dass die Wirkstoffe in die Pflanze / den Zielorganismen aufgenommen werden. Üblicherweise werden deshalb systemische agrochemische Wirkstoffe als Emulsionskonzentrat (EC), Soluble Liquid (SL) und / oder ölbasierendes Suspensionskonzentrat (OD) formuliert. In einer EC- und SL-Formulierung liegt der Wirkstoff in gelöster Form vor, bei einer OD-Formulierung als Feststoff. Auch ein Suspensionskonzentrat (SC) oder wassedispergierbares Granulat (WG) ist in der Regel technisch möglich. Im weitere werden nur Suspensionskonzentrate beschrieben wobei auch andere Formuliertypen wobei der Wirkstoff in eine im Wasser dispergierbare Form vorliegt gemeint sind. Bei der Verwendung von SC-Formulierungen ist es jedoch zur Erreichung einer ausreichenden biologischen Wirkung notwendig, dass der Wirkstoff mit einem Additiv kombiniert wird. Ein Additiv in diesem Zusammenhang ist eine Komponente, welche die biologische Wirkung der Wirkstoff verbessert, ohne selbst eine biologische Wirkung zu zeigen. Insbesondere ermöglicht / fördert ein Additiv die Aufnahme des Wirkstoffes in das Blatt (Penetrationsförderer). Ein Penetrationsförderer kann in die Formulierung des agrochemischen Wirkstoffs eingebaut werden (In-can-Formulierung) oder nach Verdünnen der konzentrierten Formulierung der Spritzbrühe zugegeben werden (Tank-Mix). Zur Vermeidung von Dosierungsfehlern und zur Verbesserung der Sicherheit der Benutzer bei der Anwendung von agrochemische Produkten ist es vorteilhaft, die Penetrationsförderer in die Formulierung einzubauen. Weiterhin wird dadurch die unnötige Verwendung von extra Verpackungsmaterial für die Tank-Mix Produkten vermieden.

Es sind bereits einige wasserbasierte Suspensionskonzentrate von agrochemischen Wirkstoffen, welche Penetrationsförderer enthalten, bekannt geworden. So werden in WO 05/036963 Formulierungen dieses Typs beschrieben, die neben bestimmten Fungiziden auch mindestens einen Penetrationsförderer aus der Gruppe der Alkanolethoxylate enthalt. In WO 99/060851 sind verschiedenste Alkanolethoxylate auf Basis von Fettalkoholen beschrieben.

Nachteil der oben genannten Formulierungen mit Penetrationsförderern ist, dass besonders bei der Anwendung auf Blättern, Früchten oder andere Pflanzenteilen in sensiblen Kulturpflanzen wie Kernobst (z.B. Malus domestica, Pyrus communis), Steinobst (Prunus armeniaca, Prunus domestica, Prunus persica), Citrus-Kulturen, Gemüse wie zum Beispiel Paprika (Capsicum annuum) und Netzmelone (Cucumis melo) sowie Zierpflanzen wie Rosen nach Applikation und Trocknen der Spritzflüssigkeit der Spritzbrühenrückstand zu Pflanzenschäden führen kann.

Weiterhin sind aus Pest. Manag. Sci. 58: 825-833 (2002) Triglyzeridethoxylate (Agnique® RSO Serie) bekannt, welche als Tank-Mix Penetrationsförderer für systemische wasserlösliche agrochemische Wirkstoffe empfohlen worden sind. Als Vorteil dieser Hilfsmittel wurde die Pflanzenverträglichkeit auf Unkräutern genannt. Diese ist durch eine Nichtbeeinflussung der Photosynthese charakterisiert, was als vorteilhaft für die Systemizität von Phloem-mobilen Wirkstoffen wie Glyphosat ist. Die für eine ausreichende Wirkstoffaufnahme nötigen Spritzbrühenkonzentrationen lagen dabei jedoch zwischen 1 und 10 g/l, was nicht mit einer "In-Can" Formulierung vereinbar ist.

In US 2002/0155954 sind Triglyzeridethoxylate, welche die Oberflächenspannung der Spritzbrühe unter 40 mN/m erniedrigen, als Additiv genannt worden. Bei dieser Anmeldung sind die Triglyzeridethoxylate in einer "In-Can"-Formulierung beschrieben. Die dort offenbarten Triglyzeridethoxylate auf Basis von Rizinusöl sind allerdings aufgrund ihrer Herkunft strukturell von den erfindungsgemäßen Triglyzeridethoxylaten deutlich verschieden. Rizinusöl ist ein pflanzliches Öl, das in den aliphatischen Seitenketten eine Hydroxy-Funktionalität hat, und deshalb zusätzlich an dieser Stelle ethoxyliert werden kann. Dieses in Gegensatz zu den erfindungsgemäßen Triglyzeridethoxylaten, welche nur zwischen der Glyzerid-Einheit und den verschiedenen aliphatischen Seitenketten ethoxyliert werden.

Der vorliegenden Erfindung liegt die Aufgabe zugrunde stabile, lagerbare, wasserbasierende Suspensionskonzentrate zu entwickeln, welche mindestens einen Penetrationsförderer enthält, jedoch ohne dass die Pflanzenverträglichkeit negativ beeinflusst wird.

Es wurde gefunden, dass im Wasser dispergierbare agrochemische Formulierungen enthaltend einen Penetrationsförderer aus der Klasse der Polyalkoxytriglyzeride dieses Problem lösen. Gegenstand der vorliegenden Erfindung sind also im Wasser dispergierbare agrochemische Formulierungen, enthaltend
- mindestens einen bei Raumtemperatur festen agrochemische Wirkstoff und
- mindestens einen Penetrationsförderer aus der Klasse der Polyalkoxytriglyzeride.
   Bevorzugt handelt es sich bei den erfindungsgemäßen Zusammensetzungen um flüssige Suspensionskonzentrate, enthaltend
- mindestens einen bei Raumtemperatur festen agrochemischen Wirkstoff,
- mindestens einen Penetrationsförderer aus der Klasse der Polyalkoxytriglyzeride, wobei das Triglyzerid pflanzlichen Ursprungs ist,
- mindestens ein nicht-ionisches Tensid und/oder mindestens ein anionisches Tensid und
- gegebenenfalls einen oder mehrere Zusatzstoffen aus den Gruppen der Frostschutzmittel, der schaumhemmenden Mittel, der Konservierungsmittel, der Antioxydantien, der Spreitmittel, der Farbstoffe und/oder der Verdicker.

Ebenso bevorzugt sind auch nach üblichen Methoden herstellbare wasserdispergierbare Granulate enthaltend
- mindestens einen bei Raumtemperatur festen agrochemischen Wirkstoff und
- mindestens einen Penetrationsförderer aus der Klasse der Polyalkoxytriglyzeride, wobei das Triglyzerid pflanzlichen Ursprungs ist,
- gegebenenfalls weitere Formulierhilfsmittel aus den Gruppen der Emulgiermittel, der nicht-ionischen und/oder anionischen Tenside, der schaumhemmenden Mittel, der Konservierungsmittel, der Antioxidantien, der Farbstoffe und/oder der inerten Füllmaterialien.

Weiterhin wurde gefunden, dass sich erfindungsgemäße Suspensionskonzentrate auf Wasserbasis herstellen lassen, indem man
- mindestens einen bei Raumtemperatur festen agrochemischen Wirkstoff,
- mindestens einen Penetrationsförderer aus der Klasse der Polyalkoxytriglyzeride, wobei das Triglyzerid pflanzlichen Ursprungs ist,
- mindestens ein nicht-ionisches Tensid und/oder mindestens ein anionisches Tensid und
- gegebenenfalls einen oder mehrere Zusatzstoffen aus den Gruppen der Frostschutzmittel, der schaumhemmenden Mittel, der Konservierungsmittel, der Antioxydantien, der Spreitmittel, der Farbstoffe und/oder einen Verdicker.
miteinander vermischt und die entstehende Suspension gegebenenfalls anschließend mahlt.

Schließlich wurde gefunden, dass sich die erfindungsgemäßen Suspensionskonzentrate sehr gut zur Applikation der enthaltenen agrochemischen Wirkstoffe auf Pflanzen und/oder deren Lebensraum eignen.

Die Entstehung von Pflanzenschäden ist komplex und zurückzuführen auf die Penetration von Penetrationsförderern wie Alkanolethoxylaten insbesondere am Rand der Spritztröpfchen auf der Pflanze. Dadurch kann es zu lokal hohen Konzentrationen von Additiv und/oder Wirkstoff kommen, wodurch nekrotische Ringe oder Kreise auf der behandelten Pflanzenoberfläche sichtbar werden die sich teilweise dann auch wegen Gewebezerfall flächig ausbreiten. Nun wurde überraschend gefunden, dass das Auftreten von Nekrosen mit der Anwesenheit von Spaltöffnungen oder davon abgeleiteten Strukturen wie z.B. Lentizellen zusammenhängt. Weiter wurden Polyalkoxytriglyzeride gefunden, die die Wirkstoffaufnahme fördern, aber im Unterschied zu anderen typischerweise verwendeten Penetrationsförderern überraschenderweise keine Nekrosen erzeugen. So werden zum Beispiel mit Alkanolethoxylaten - mit oder ohne Wirkstoff - auf der Unterseite von Rosenblättern bei Konzentrationen von 0,1 - 1 g/l starke Ringnekrosen erzeugt, während mit Polyalkoxytriglyzeriden - ebenfalls mit oder ohne Wirkstoff - keine Nekrosen beobachtet werden. Warum gerade bei empfindlichen Pflanzen mit Spaltöffnungen auf der Blattseite Nekrosen auftreten ist unbekannt. Es wurde ausserdem gefunden, dass diese verträglichen Polyalkoxytriglyzeride bei Einsatzkonzentrationen von 0,1-1 g/l sich im Gegensatz zu US 2002/0155954 durch Werte der Oberflächenspannung der Spritzbrühe über 41 mN/m auszeichnen.

Als überraschend ist weiterhin einzustufen, dass Polyalkoxytriglyzeride wie z.B. das Rapsölethoxylat Crovol® CR70G (Croda) die Aufnahme von sehr unterschiedlichen Substanzen (z.B. Substanzen verschiedener Lipophilie, Elektrolyte wie Nicht-Elektrolyte) wie z.B. Sulfonylharnstoffen, Ketoenolen, Azolfungiziden usw. fördert. Dabei zeichnen sich Aufnahmekinetiken mit erfindungsgemäßen Polyalkoxytriglyzeriden dadurch aus, dass die Wirkstoffpenetration im Unterschied zu bekannten Penetrationsförderern nicht bevorzugt unmittelbar nach Applikation mit deutlicher Abnahme danach, sondern mit sehr konstanter Kinetik über einen Zeitraum von einigen Tagen erfolgt. Auch dieser Effekt wirkt sich positiv auf die Pflanzenverträglichkeit aus, weil dadurch kurzfristig lokal hohe Konzentration von kritischen Wirkstoffen im Blattgewebe vermieden werden können.

Die Unverträglichkeit von Herbiziden hängt ebenfalls entscheidend vom schnellen Aufbau lokal hoher Konzentrationen in den behandelten Organen der Kulturpflanze ab. Deshalb werden Herbizide wie z.B. Sulfonylharnstoffe in Getreide durch Penetrationsförderer, welche eine schnelle Wirkstoffaufnahme nach Applikation verursachen, weniger gut verträglich. Dagegen wird eine langsame Aufnahme des Herbizides oft gut vertragen. Da die gefundenen Eigenschaften der Polyalkoxytriglyzeride, selbst keine Nekrosen zu verursachen und die Wirkstoffaufnahme langsam aber langandauernd aus dem Spritzbelag zu fördern, auch für Herbizid-Wirkstoffe gilt, wird auch die Selektivität von Herbiziden gegenüber z.B. Alkanolethoxylaten oder Rapsölmethylester-Penetrationsförderern positiv beeinflusst.

Zuletzt ist es als äußerst überraschend zu bezeichnen, dass die erfindungsgemäßen Suspensionskonzentrate eine sehr gute Stabilität aufweisen. Die angewendeten Polyalkoxytriglyzeride haben ebenso wie die Dispergiermittel eines wasserbasierten Suspensionskonzentrats oberflächenaktive Eigenschaften, was normalerweise zur Konkurrenz mit den Dispergiermitteln führt. Dieses führt speziell bei hoher Lagertemperatur oder nach Lagerung bei wechselnden Temperaturbedingungen zur Destabilisierung des Suspensionskonzentrats.

Im Folgenden werden bevorzugte Ausführungsformen des Erfindungsgegenstandes beschrieben.

Als Penetrationsförderer kommen im vorliegenden Zusammenhang Polyalkoxytriglyzeride in Betracht. Polyalkoxytriglyzeride können durch Alkoxylierung von Triglyzeriden hergestellt werden. Die Alkoxylierung von Triglyzeriden führt zu Stoffgemischen, wobei 1 bis 3 der Seitenketten alkoxyliert werden. Bei der Alkoxylierung kann man unterscheiden zwischen Ethoxylierung, Propoxylierung, Butoxylierung oder eine Mischung dieser Prozesse. Die Länge der unmodifizierten Seitenketten kann für jede der Seitenketten unabhängig von den anderen Seitenketten im selben Molekül variieren zwischen 9 und 24, bevorzugt zwischen 12 und 22, ganz bevorzugt zwischen 14 und 20 Kohlenstoffatomen. Diese aliphatische Seiteketten können gerade oder verzweigt vorliegen.

In einer bevorzugten Ausführungsform der vorliegenden Erfindung werden die Polyalkoxytriglyzeride durch Ethoxylierung von Triglyzeriden erhalten.

In einer besonders bevorzugten Ausführungsform der vorliegenden Erfindung werden die Polyalkoxytriglyzeride durch Ethoxylierung von Rapsöl, Kornöl, Palmkernöl oder Mandelöl erhalten.

In eine ganz besonders bevorzugten Ausführungsform der vorliegenden Erfindung werden die Polyalkoxytriglyzeride durch Ethoxylierung von Rapsöl erhalten, wobei der Ethoxylierungsgrad zwischen 60 Gew.-% und 80 Gew.-% liegt.

Entsprechende Polyalkoxytriglyzeride sind bekannt oder lassen sich nach bekannten Methoden herstellen (kommerziell sind sie z.B. als Crovol® A 70 UK, Crovol® CR 70 G, Crovol® M 70 oder Crovol® PK 70 von der Firma Croda erhältlich).

Als Wirkstoffe können in den erfindungsgemässen Formulierungen alle bei Raumtemperatur festen agrochemischen Wirkstoffe eingesetzt werden.

Bevorzugt sind systemisch wirkende Fungizide, Insektizide und Herbizide.

Besonders bevorzugt sind Wirkstoffe aus den Klassen der Azol-Fungizide (Azaconazol, Bitertanol, Bromuconazol, Cyproconazol, Diclobutrazol, Difenoconazol, Diniconazol, Diniconazol-M, Epoxiconazol, Etaconazol, Fenarimol, Fenbuconazol, Fluquinconazol, Flurprimidol, Flusilazol, Flutriafol, Furconazol, Furconazol-cis, Hexaconazol, Imazalil, Imazalilsulfat Imibenconazol, Ipconazol, Metconazol, Myclobutanil, Nuarimol, Oxpoconazol, Paclobutrazol, Penconazol, Pefurazoat Prochloraz, Propiconazol, Prothioconazol, Pyrifenox, Simeconazol, Tebuconazol, Tetraconazol, Triadimefon, Triadimenol, Triflumizol Triforin, Triticonazol, Uniconazol, Voriconazol, Viniconazol,), Strobilurin-Fungizide (Azoxystrobin, Dimoxystrobin, Fluoxastrobin, Kresoxim-methyl, Metominostrobin, Orysastrobin, Picoxystrobin, Pyraclostrobin, Trifloxystrobin), der SDH-Fungizide, der Chlornikotinyl-Insektizide (Clothianidin, Dinotefuran, Imidacloprid, Thiamethoxam, Nitenpyram, Nithiazin, Acetamiprid, Imidacloprid, Nitenpyram, Thiacloprid), der insektiziden Ketoenole (Spirodiclofen, Spiromesifen, Spirotetramat), Fiprole (Fiprol, Ethiprol) und Butenolide sowie Pymetrozine, Fluopicolid, *N*-(3',4'-Dichlor-5-fluor-1,1'-biphenyl-2-yl)-3-(difluormethyl)-1-methyl-1*H*-pyrazol-4-carboxamid und N-{2-[3-chlor-5-(trifluormethyl)-2-pyridinyl]ethyl}-2-(trifluormethyl)benzamid. Ebenfalls besonders bevorzugt sind Herbizide, insbesondere Sulfonylharnstoffe, Triketone und herbizide Ketoenole sowie Safener.

Ganz besonders bevorzugt als Wirkstoffe sind
die Fungizide
- Tebuconazol,
- Prothioconazol,
- *N*-(3',4'-Dichlor-5-fluor-1,1'-biphenyl-2-yl)-3-(difluormethyl)-1-methyl-1*H-*pyrazol-4-carboxamid (bekannt aus WO 03/070705) der Formel 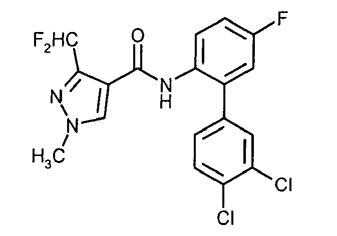
- N-{2-[3-chlor-5-(trifluormethyl)-2-pyridinyl]ethyl}-2-(trifluormethyl)benzamid (bekannt aus WO 04/16088)
- Trifloxystrobin,
- Fluopicolid
die Insektizide
- Imidacloprid,
- Thiamethoxam,
- Clothianidin,
- Thiacloprid,
- Spirotetramat,
- Fipronil,
- Ethiprol und
die Herbizide
- Thiencarbazone
- Sulcotrione,
- Mesotrione,
- Tembotrione,
- Pyrasulfotole,
- Iodosulfuron,
- Mesosulfuron und
- Foramsulfuron.

Als nicht-ionische Tenside kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon, Mischpolymerisate aus Polyvinylacetat und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, polyoxyamine Derivate und Nonylphenotethoxylate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Antioxidantien kommen alle üblicherweise für diesen Zweck in agrochemischen Mitteln einsetzbaren Substanzen in Betracht. Bevorzugt ist Butylhydroxytoluol (2,6-di-t-butyl-4-methylphenol , BHT).

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Spreitmittel kommen alle üblicherweise für diesen Zweck in agro-chemischen Mitteln einsetzbaren Substanzen in Betracht. Bevorzugt sind Polyether- oder organo modifizierte polysiloxane.

Als inerte Füllmaterialien kommen alle üblicherweise für diesen Zweck in agrochemischen Mitteln einsetzbaren Substanzen in Betracht. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Als Emulgiermittel kommen alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid und/oder Butylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkylammoniumhalogenide, Trialkylaryl-ammoniumhalogenide und Alkylamin-sulfonate. Die Emulgiermittel können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C₆-C₂₀-Alkoholen mit Ethylenoxid im Molverhältnis 1:5 bis 1:50, Umsetzungsprodukte von Fettaminen mit Ethylenoxid im Molverhältnis 1:2 bis 1:25, Umsetzungsprodukte von 1 Mol Phenol mit 2 bis 3 Mol Styrol und 10 bis 50 Mol Ethylenoxid, Umsetzungsprodukte von C₈-C₁₂-Alkylphenolen mit Ethylenoxid im Molverhältnis 1:5 bis 1:30, Alkylglykoside, C₈-C₁₆-Alkylbenzol-sulfonsäuresalze, wie z.B. Calcium-, Monoethanolammonium-, Di-ethanolammonium- und Tri-ethanolammonium-Salze.

Weitere Emulgiermittel sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Als Frostschutzmittel kommen alle üblicherweise in agrochemischen Mitteln einsetzbaren Substanzen dieses Typs in Frage. Bevorzugt sind Harnstoff, Glyzerin oder Propylenglykol.

Als Verdicker kommen alle üblicherweise in agrochemischen Mitteln einsetzbaren Substanzen dieses Typs in Frage. Bevorzugt sind Silikate (wie z.B. Attagel® 50 der Firma Engelhard) oder Xanthan gum (wie z.B. Kelzan® S der Firma Kelko).

Die erfindungsgemäßen Zusammensetzungen enthalten
- im Allgemeinen zwischen 1 und 60 Gew.-% von einem oder mehreren der erfindungsgemäß verwendbaren agrochemischen Wirkstoffe, bevorzugt 5 bis 50 Gew.-% und besonders bevorzugt 10 bis 30 Gew.-%,
- im Allgemeinen zwischen 1 und 50 Gew.-% mindestens eines erfindungsgemäßen Penetrationsförderers, bevorzugt 2 bis 30 Gew.-% und besonders bevorzugt 5 bis 20 Gew.-%.,
- im Allgemeinen zwischen 1 und 20 Gew.-% mindestens eines nicht-ionischen und/oder mindestens eines anionischen Tensids, bevorzugt zwischen 2,5 und 10 Gew.-%,
- im Allgemeinen zwischen 0,1 und 25 Gew.-% an Zusatzstoffen aus den Gruppen der schaumhemmenden Mittel, der Konservierungsmittel, der Antioxidantien, der Spreitmittel, der Farbstoffe und/oder Verdicker, bevorzugt zwischen 0,1 und 20 Gew.-%.

Erfindungsgemäße Zusammensetzungen in Form von wasserdispergierbaren Granulaten enthalten im Allgemeinen zwischen 1 und 20 Gew.-% mindestens eines erfindungsgemäßen Penetrationsförderers, bevorzugt 5 bis 20 Gew.-%.

Die Herstellung der erfindungsgemäßen Suspensionskonzentrate erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C.

Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Zusammensetzungen handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überfiihren.

Die Aufwandmenge an den erfindungsgemäßen Zusammensetzungen kann innerhalb eines größeren Bereiches variiert werden. Sie richtet sich nach den jeweiligen agrochemischen Wirkstoffen und nach deren Gehalt in den Zusammensetzungen.

Die erfindungsgemäßen Zusammensetzungen enthaltend mindestens einen der erfindungsgemäßen insektiziden Wirkstoffe eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp..

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp..

Aus der Ordnung der Chilopoda z.B. Geophilus spp., Scutigera spp..
Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp..

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Reticulitermes spp., Odontotermes spp..

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Die erfindungsgemäßen Zusammensetzungen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasma-like-organism) und RLO (Rickettsia-like-organism) verwendet werden.

Die erfindungsgemäßen Zusammensetzungen können neben den bereits zuvor genannten agrochemischen Wirkstoffen als Mischungspartner weitere Wirkstoffe wie Insektizide, Lockstoffe, Sterilantie, Bakterizide, Akarizide, Nematizide, Fungizide, wachstumsregulierende Stoffe, Herbizide, Safener, Düngemittel oder Semiochemicals enthalten.

Besonders günstige Mischungspartner sind z.B. die folgenden:

### Fungizide:

Inhibitoren der Nucleinsäure Synthese
Benalaxyl, Benalaxyl-M, Bupirimat, Chiralaxyl, Clozylacon, Dimethirimol, Ethirimol, Furalaxyl, Hymexazol, Mefenoxam, Metalaxyl, Metalaxyl-M, Ofurace, Oxadixyl, Oxolinsäure

Inhibitoren der Mitose und Zellteilung
Benomyl, Carbendazim, Diethofencarb, Ethaboxam, Fuberidazole, Pencycuron, Thiabendazol, Thiophanat-methyl, Zoxamid

Inhibitoren der Atmungskette Komplex I
Diflumetorim

Inhibitoren der Atmungskette Komplex II
Boscalid, Carboxin, Fenfuram, Flutolanil, Furametpyr, Furmecyclox, Mepronil, Oxycarboxin, Penthiopyrad, Thifluzamid

Entkoppler
Dinocap, Fluazinam

Inhibitoren der ATP Produktion
Fentinacetat, Fentinchlorid, Fentinhydroxid, Silthiofam

Inhibitoren der Aminosäure- und Proteinbiosynthese
Andoprim, Blasticidin-S, Cyprodinil, Kasugamycin, Kasugamycinhydrochlorid Hydrat, Mepanipyrim, Pyrimethanil

Inhibitoren der Signal-Transduktion
Fenpiclonil, Fludioxonil, Quinoxyfen

Inhibitoren der Fett- und Membran Synthese
Chlozolinat, Iprodion, Procymidon, Vinclozolin
Ampropylfos, Kalium-Ampropylfos, Edifenphos, Etridiazol, Iprobenfos (IBP), Isoprothiolan, Pyrazophos
Tolclofos-methyl, Biphenyl
Iodocarb, Propamocarb, Propamocarb hydrochlorid, Propamocarb-Fosetylat

Inhibitoren der Ergosterol Biosynthese
Fenhexamid,
Aldimorph, Dodemorph, Dodemorphacetat, Fenpropidin, Fenpropimorph, Spiroxamin, Tridemorph,
Naftifin, Pyributicarb, Terbinafin

Inhibitoren der Zellwand Synthese
Benthiavalicarb, Bialaphos, Dimethomorph, Flumorph, Iprovalicarb, Mandipropamid, Polyoxins, Polyoxorim, Validamycin A

Inhibitoren der Melanin Biosynthese
Carpropamid, Diclocymet, Fenoxanil, Phthalid, Pyroquilon, Tricyclazol

Resistenzinduktion
Acibenzolar-S-methyl, Probenazol, Tiadinil

Multisite
Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

Weitere Fungizide
Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ferimzon, Flumetover, Flusulfamid, Fluoroimid, Fosetyl-Aluminium, Fosetyl-Caclcium, Fosetyl-Natrium, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothalisopropyl, Octhilinon, Oxamocarb, Oxyfenthiin, Pentachlorphenol und Salze, 2-Phenylphenol und Salze, Piperalin, Propanosin-Natrium, Proquinazid, Pyribencarb, Pyrrolnitrin, Quintozen, Tecloftalam, Tecnazen, Triazoxid, Trichlamid, Valiphenal, Zarilamid,
2-(2-{[6-(3-Chlor-2-methylphenoxy)-5-fluorpyrimidin-4-yl]oxy}phenyl)-2-(methoxyimino)-N-methylacetamid,
2-[[[[1-[3(lFluor-2-phenylethyl)oxy] phenyl] ethyliden]amino]oxy]methyl]-alpha-(methoxyimino)-N-methyl-alphaE-benzacetamid,
cis-1-(4-Chlorphenyl)-2-(1H-1,2,4-triazol-1-yl)-cycloheptanol,
1-[(4-Methoxyphenoxy)methyl]-2,2-dimethylpropyl- 1H-imidazol-1- carbonsäure,
2,3,5,6-Tetrachlor-4-(methylsulfonyl)-pyridin,
2-Butoxy-6-iod-3-propyl-benzopyranon-4-on,
2-Chlor-N-(2,3-dihydro-1,1,3-trimethyl-1 H-inden-4-yl)-3-pyridincarboxamid,
3,4,5-Trichlor-2,6-pyridindicarbonitril,
3,4-Dichlor-N-(2-cyanophenyl)isothiazol-5-carboxamid (Isotianil)
3-[5-(4-Chlorphenyl)-2,3-dimethylisoxazolidin-3-yl]pyridin,
5-Chlor-6-(2,4,6-trifluorophenyl)-N-[(1R)-1,2,2-trimethylpropyl][1,2,4]triazolo[1,5-a]pyrimidin-7-amin,
5-Chlor-7-(4-methylpiperidin-1-yl)-6-(2,4,6-trifluorophenyl)[1,2,4]triazolo[1,5-a]pyrimidin,
5-Chlor-N-[(1R)-1,2-dimethylpropyl]-6-(2,4,6-trifluorophenyl) [1,2,4]triazolo[1,5-a]pyrimidin-7-amin,
Methyl 2-[[[cyclopropyl[(4-methoxyphenyl) imino]methyl]thio]methyl]-.alpha.-(methoxymethylen)- benzacetat,
Methyl 1-(2,3-dihydro-2,2-dimethyl-1H-inden-1-yl)-1H-imidazole-5-carboxylat,
N-(3-Ethyl-3,5,5-trimethyl-cyclohexyl)-3-formylamino-2-hydroxy-benzamid,
N-(4-Chlor-2-nitrophenyl)-N-ethyl-4-methyl-benzenesulfonamid,
N-(4-chlorbenzyl)-3-[3-methoxy-4-(prop-2-yn-1-yloxy)phenyl]propanamid,
N-[(4-chlorphenyl)(cyano)methyl]-3-[3-methoxy-4-(prop-2-yn-1-yloxy)phenyl]propanamid,
N-(5-Brom-3-chlorpyridin-2-yl)methyl-2,4-dichlornicotinamid,
N-[1-(5-Brom-3-chloropyridin-2-yl)ethyl]-2,4-dichloronicotinamid,
(2S)-N-[2-[4-[[3-(4-chlorophenyl)-2-propinyl]oxy]-3-methoxyphenyl]ethyl]- 3-methyl-2-[(methylsulfonyl)amino]-butanamid,
N-{(Z)-[(cyclopropylmethoxy) imino][6-(difluormethoxy)-2,3-difluorphenyl]methyl}-2-benzacetamid,
N-{2-[1,1'-bi(cyclopropyl)-2-yl]phenyl}-3-(difluormethyl)-1-methyl-1H-pyrazol-4-carboxamid,
N-ethyl-N-methyl-N'-{2-methyl-5-(trifluormethyl)4-[3-(trimethylsilyl)propoxy]phenyl}imidoformamid,
O-[1-[(4-Methoxyphenoxy)methyl]-2,2-dimethylpropyl]-1H-imidazol- 1- carbothioic acid,
2-Amino-4-methyl-N-phenyl-5-thiazolcarboxamid,
2,4-Dihydro-5-methoxy-2-methyl-4-[[[[1-[3-(trifluoromethyl)-phenyl]-ethyliden]-amino]-oxy]-methyl]-phenyl]-3H-1,2,4-triazol-3-on (CAS Nr. 185336-79-2),
N-(6-Methoxy-3-pyridinyl)-cyclopropan carboxamid,

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Acetylcholinesterase (AChE) Inhibitoren
Carbamate,
zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate
Organophosphate,
zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

Natrium-Kanal-Modulatoren / Spannungsabhängige Natrium-Kanal-Blocker
Pyrethroide,
zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum) DDT
Oxadiazine,
zum Beispiel Indoxacarb
Semicarbazon,
zum Beispiel Metaflumizon (BAS3201)

Acetylcholin-Rezeptor-Agonisten/-Antagonisten
Nicotine, Bensultap, Cartap

Acetylcholin-Rezeptor-Modulatoren
Spinosyne,
zum Beispiel Spinosad, Spinetoram

GABA-gesteuerte Chlorid-Kanal-Antagonisten
Organochlorine,
zum Beispiel Camphechlor, Chlordane, Endosulfan, Gamma-HCH, HCH, Heptachlor, Lindane, Methoxychlor
Fiprole,
zum Beispiel Acetoprole, Pyrafluprole, Pyriprole, Vaniliprole

Chlorid-Kanal-Aktivatoren
Mectine,
zum Beispiel Abamectin, Emamectin, Emamectin-benzoate, Ivermectin, Lepimectin,
Milbemycin

Juvenilhormon-Mimetika,
zum Beispiel Diofenolan, Epofenonane, Fenoxycarb, Hydroprene, Kinoprene,
Methoprene, Pyriproxifen, Triprene

Ecdysonagonisten/disruptoren
Diacylhydrazine,
zum Beispiel Chromafenozide, Halofenozide, Methoxyfenozide, Tebufenozide

Inhibitoren der Chitinbiosynthese
Benzoylharnstoffe,
zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron Buprofezin
Cyromazine

Inhibitoren der oxidativen Phosphorylierung, ATP-Disruptoren
Diafenthiuron
Organozinnverbindungen,
zum Beispiel Azocyclotin, Cyhexatin, Fenbutatin-oxide

Entkoppler der oxidativen Phosphorylierung durch Unterbrechung des H-Protongradienten
Pyrrole,
zum Beispiel Chlorfenapyr
Dinitrophenole,
zum Beispiel Binapacyrl, Dinobuton, Dinocap, DNOC, Meptyldinocap

Site-I-Elektronentransportinhibitoren
METI's,
zum Beispiel Fenazaquin, Fenpyroximate, Pyrimidifen, Pyridaben, Tebufenpyrad, Tolfenpyrad
Hydramethylnon
Dicofol

Site-II-Elektronentransportinhibitoren
Rotenone

Site-III-Elektronentransportinhibitoren
Acequinocyl, Fluacrypyrim

Mikrobielle Disruptoren der Insektendarmmembran
Bacillus thuringiensis-Stämme

Inhibitoren der Fettsynthese
Tetramsäuren,
zum Beispiel cis-3-(2,5-dimethylphenyl)-4-hydroxy-8-methoxy-1-azaspiro[4.5]dec-3-en-2-on
Carboxamide,
zum Beispiel Flonicamid
Oktopaminerge Agonisten,
zum Beispiel Amitraz

Inhibitoren der Magnesium-stimulierten ATPase,
Propargite
Nereistoxin-Analoge,
zum Beispiel Thiocyclam hydrogen oxalate, Thiosultap-sodium

Agonisten des Ryanodin-Rezeptors,
Benzoesäuredicarboxamide,
zum Beispiel Flubendiamid

Anthrani lam ide,
zum Beispiel Rynaxypyr (3-bromo-N-{4-chloro-2-methyl-6-[(methylamino)carbonyl]phenyl}-1-(3-chloropyridin-2-yl)-1H-pyrazole-5-carboxamide)

Biologika, Hormone oder Pheromone
Azadirachtin, Bacillus spec., Beauveria spec., Codlemone, Metarrhizium spec.,
Paecilomyces spec., Thuringiensin, Verticillium spec.

Wirkstoffe mit unbekannten oder nicht spezifischen Wirkmechanismen
Begasungsmittel,
zum Beispiel Aluminium phosphide, Methyl bromide, Sulfuryl fluoride
Fraßhemmer,
zum Beispiel Cryolite, Flonicamid, Pymetrozine
Milbenwachstumsinhibitoren,
zum Beispiel Clofentezine, Etoxazole, Hexythiazox
Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene,
Cyflumetofen, Dicyclanil, Fenoxacrim, Fentrifanil, Flubenzimine, Flufenerim, Flutenzin,
Gossyplure, Hydramethylnone, Japonilure, Metoxadiazone, Petroleum, Piperonyl butoxide, Potassium oleate, Pyridalyl, Sulfluramid, Tetradifon, Tetrasul, Tri-arathene,Verbutin

Auch eine Mischung mit anderen bekannten Wirkstoffen, wie Düngemitteln, Wachstumsregulatoren, Semiochemicals, oder auch mit Mitteln zur Verbesserung der Pflanzeneigenschaften ist möglich.

Erfindungsgemäße Zusammensetzungen können außerdem neben mindestens einer Verbindung der Formel (I) mindestens einen weiteren herbiziden Wirkstoff enthalten, bevorzugt aus der Gruppe bestehend aus Acetochlor, Acifluorfen (-sodium), Aclonifen, Alachlor, Alloxydim (-sodium), Ametryne, Amicarbazone, Amidochlor, Amidosulfuron, Aminopyralid, Anilofos, Asulam, Atrazine, Azafenidin, Azimsulfuron, Beflubutamid, Benazolin (-ethyl), Benzcarbazone, Benfuresate, Bensulfuron (-methyl), Bentazon, Benzfendizone, Benzobicyclon, Benzofenap, Benzoylprop (-ethyl), Bialaphos, Bifenox, Bispyribac (-sodium), Bromobutide, Bromofenoxim, Bromoxynil, Butachlor, Butafenacil (-allyl), Butroxydim, Butylate, Cafenstrole, Caloxydim, Carbetamide, Carfentrazone (-ethyl), Chlomethoxyfen, Chloramben, Chloridazon, Chlorimuron (-ethyl), Chlornitrofen, Chlorsulfuron, Chlortoluron, Cinidon (-ethyl), Cinmethylin, Cinosulfuron, Clefoxydim, Clethodim, Clodinafop (-propargyl), Clomazone, Clomeprop, Clopyralid, Clopyrasulfuron (-methyl), Cloransulam (-methyl), Cumyluron, Cyanazine, Cybutryne, Cycloate, Cyclosulfamuron, Cycloxydim, Cyhalofop (-butyl), 2,4-D, 2,4-DB, Desmedipham, Diallate, Dicamba, Dichlorprop (-P), Diclofop (-methyl), Diclosulam, Diethatyl (-ethyl), Difenzoquat, Diflufenican, Diflufenzopyr, Dimefuron, Dimepiperate, Dimethachlor, Dimethametryn, Dimethenamid, Dimexyflam, Dinitramine, Diphenamid, Diquat, Dithiopyr, Diuron, Dymron, Epropodan, EPTC, Esprocarb, Ethalfluralin, Ethametsulfuron (-methyl), Ethofumesate, Ethoxyfen, Ethoxysulfuron, Etobenzanid, Fenoxaprop (-P-ethyl), Fentrazamide, Flamprop (-isopropyl, -isopropyl-L, -methyl), Flazasulfuron, Florasulam, Fluazifop (-P-butyl), Fluazolate, Flucarbazone (-sodium), Flucetosulfuron, Flufenacet, Flufenpyr, Flumetsulam, Flumiclorac (-pentyl), Flumioxazin, Flumipropyn, Flumetsulam, Fluometuron, Fluorochloridone, Fluoroglycofen (-ethyl), Flupoxam, Flupropacil, Flurpyrsulfuron (-methyl, -sodium), Flurenol (-butyl), Fluridone, Fluroxypyr (-butoxypropyl, -meptyl), Flurprimidol, Flurtamone, Fluthiacet (-methyl), Fluthiamide, Fomesafen, Glufosinate (-ammonium), Glyphosate (-isopropylammonium), Halosafen, Haloxyfop (-ethoxyethyl, -P-methyl), Hexazinone, HOK-201, Imazamethabenz (-methyl), Imazamethapyr, Imazamox, Imazapic, Imazapyr, Imazaquin, Imazethapyr, Imazosulfuron, loxynil, Isopropalin, Isoproturon, Isouron, Isoxaben, Isoxachlortole, Isoxaflutole, Isoxapyrifop, KIH 485, Lactofen, Lenacil, Linuron, MCPA, Mecoprop, Mefenacet, Metamifop, Metamitron, Metazachlor, Methabenzthiazuron, Metobenzuron, Metobromuron, (alpha-) Metolachlor, Metosulam, Metoxuron, Metribuzin, Metsulfuron (-methyl), Molinate, Monolinuron, Naproanilide, Napropamide, Neburon, Nicosulfuron, Norflurazon, Orbencarb, Orthosulfamuron, Oryzalin, Oxadiargyl, Oxadiazon, Oxasulfuron, Oxaziclomefone, Oxyfluorfen, Paraquat, Pelargonsäure, Pendimethalin, Pendralin, Penoxsulam, Pentoxazone, Phenmedipham, Picolinafen, Pinoxaden, Piperophos, Pretilachlor, Primisulfuron (-methyl), Profluazol, Prometryn, Propachlor, Propanil, Propaquizafop, Propisochlor, Propoxycarbazone (-sodium), Propyzamide, Prosulfocarb, Prosulfuron, Pyraflufen (-ethyl), Pyrazogyl, Pyrazolate, Pyrazosulfuron (-ethyl), Pyrazoxyfen, Pyribenzoxim, Pyributicarb, Pyridate, Pyridatol, Pyriftalid, Pyriminobac (-methyl), Pyrithiobac (-sodium), Pyrimisulfan, Quinchlorac, Quinmerac, Quinoclamine, Quizalofop (-P-ethyl, -P-tefuryl), Rimsulfuron, Sethoxydim, Simazine, Simetryn, Sulfentrazone, Sulfometuron (-methyl), Sulfosate, Sulfosulfuron, Tebutam, Tebuthiuron, Tepraloxydim, Terbuthylazine, Terbutryn, TH-547, Thenylchlor, Thiafluamide, Thiazopyr, Thidiazimin, Thifensulfuron (-methyl), Thiobencarb, Thiocarbazil, Topramezone, Tralkoxydim, Triallate, Triasulfuron, Tribenuron (-methyl), Triclopyr, Tridiphane, Trifluralin, Trifloxysulfuron, Triflusulfuron (-methyl), Tritosulfuron und Triflosulam.

Die erfindungsgemäßen Zusammensetzungen können ferner beim Einsatz in ihren handelsüblichen Formulierungen sowie in den aus diesen Formulierungen bereiteten Anwendungsformen in Mischung mit Synergisten vorliegen. Synergisten sind Verbindungen, durch die die Wirkung der in den erfindungsgemäßen Zusammensetzungen enthaltenen Wirkstoffe gesteigert wird, ohne daß der zugesetzte Synergist selbst aktiv wirksam sein muß.

Die erfindungsgemäßen Zusammensetzungen können ferner beim Einsatz in ihren handelsüblichen Formulierungen sowie in den aus diesen Formulierungen bereiteten Anwendungsformen in Mischungen mit Hemmstoffen vorliegen, die einen Abbau des enthaltenen agrochemischen Wirkstoffes nach Anwendung in der Umgebung der Pflanze, auf der Oberfläche von Pflanzenteilen oder in pflanzlichen Geweben vermindern.

Der Wirkstoffgehalt der aus den handelsüblichen Formulierungen bereiteten Anwendungsformen kann in weiten Bereichen variieren. Die Wirkstoffkonzentration der Anwendungsformen kann von 0,00000001 bis zu 95 Gew.-% Wirkstoff, vorzugsweise zwischen 0,00001 und 1 Gew.-% liegen.

Die Anwendung geschieht in einer den Anwendungsformen angepaßten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Die erfindungsgemäße Behandlung der Pflanzen und Pflanzenteile mit den Zusammensetzungen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pfianzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Zusammensetzungen behandelt werden. Die bei den Zusammensetzungen oben angegebenen Vorzugsbereiche gelten auch für die Behandlung dieser Pflanzen. Besonders hervorgehoben sei die Pflanzenbehandlung mit den im vorliegenden Text speziell aufgeführten Zusammensetzungen.

Die erfindungsgemäßen Zusammensetzungen wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die erfindungsgemäßen Zusammensetzungen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Zusammensetzungen eine wirtschaftlichere und einfachere Tierhaltung möglich ist.

Die Anwendung der erfindungsgemäßen Zusammensetzungen geschieht im Veterinärsektor und bei der Tierhaltung in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel, Haustiere etc. kann man die Zusammensetzungen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, daß die erfindungsgemäßen insektziden Zusammensetzungen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirexjuvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

Zugleich können die erfindungsgemäßen Zusammensetzungen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Weiter können die erfindungsgemäßen Zusammensetzungen allein oder in Kombinationen mit anderen Wirkstoffen als Antifouling-Mittel eingesetzt werden.

Die Zusammensetzungen eignen sich auch zur Bekämpfung von tierischen Schädlingen im Haushalts-, Hygiene- und Vorratsschutz, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp..

Aus der Ordnung der Chilopoda z.B. Geophilus spp..

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleoptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Pemphigus spp., Phylloera vastatrix, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphorsäureestern, Carbamaten, Pyrethroiden, Neonicotinoiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfem, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Enthalten die erfindungsgemäßen Zusammensetzungen mindestens einen fungiziden Wirkstoff, so besitzen sie sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Beispielhaft, aber nicht begrenzend, seien einige Erreger von pilzlichen Erkrankungen, die unter die oben aufgezählten Oberbegriffe fallen, genannt:
Erkrankungen, hervorgerufen durch Erreger des Echten Mehltaus wie z.B.
   Blumeria-Arten, wie beispielsweise Blumeria graminis;
   Podosphaera-Arten, wie beispielsweise Podosphaera leucotricha;
   Sphaerotheca-Arten, wie beispielsweise Sphaerotheca fuliginea;
   Uncinula-Arten, wie beispielsweise Uncinula necator;
Erkrankungen, hervorgerufen durch Erreger von Rostkrankheiten wie z.B.
   Gymnosporangium-Arten, wie beispielsweise Gymnosporangium sabinae
   Hemileia-Arten, wie beispielsweise Hemileia vastatrix;
   Phakopsora-Arten, wie beispielsweise Phakopsora pachyrhizi und Phakopsora meibomiae;
   Puccinia-Arten, wie beispielsweise Puccinia recondita oder Puccinia triticina;
   Uromyces-Arten, wie beispielsweise Uromyces appendiculatus;
Erkrankungen, hervorgerufen durch Erreger der Gruppe der Oomyceten wie z.B.
   Bremia-Arten, wie beispielsweise Bremia lactucae;
   Peronospora-Arten, wie beispielsweise Peronospora pisi oder P. brassicae;
   Phytophthora-Arten, wie beispielsweise Phytophthora infestans;
   Plasmopara-Arten, wie beispielsweise Plasmopara viticola;
   Pseudoperonospora-Arten, wie beispielsweise Pseudoperonospora humuli oder
   Pseudoperonospora cubensis;
   Pythium-Arten, wie beispielsweise Pythium ultimum;
Blattfleckenkrankheiten und Blattwelken, hervorgerufen durch z.B.
   Alternaria-Arten, wie beispielsweise Alternaria solani;
   Cercospora-Arten, wie beispielsweise Cercospora beticola;
   Cladiosporum-Arten, wie beispielsweise Cladiosporium cucumerinum;
   Cochliobolus-Arten, wie beispielsweise Cochliobolus sativus
   (Konidienform: Drechslera, Syn: Helminthosporium);
   Colletotrichum-Arten, wie beispielsweise Colletotrichum lindemuthanium;
   Cycloconium-Arten, wie beispielsweise Cycloconium oleaginum;
   Diaporthe-Arten, wie beispielsweise Diaporthe citri;
   Elsinoe-Arten, wie beispielsweise Elsinoe fawcettii;
   Gloeosporium-Arten, wie beispielsweise Gloeosporium laeticolor;
   Glomerella-Arten, wie beispielsweise Glomerella cingulata;
   Guignardia-Arten, wie beispielsweise Guignardia bidwelli;
   Leptosphaeria-Arten, wie beispielsweise Leptosphaeria maculans;
   Magnaporthe-Arten, wie beispielsweise Magnaporthe grisea;
   Mycosphaerella-Arten, wie beispielsweise Mycosphaerella graminicola;
   Phaeosphaeria-Arten, wie beispielsweise Phaeosphaeria nodorum;
   Pyrenophora-Arten, wie beispielsweise Pyrenophora teres;
   Ramularia-Arten, wie beispielsweise Ramularia collo-cygni;
   Rhynchosporium-Arten, wie beispielsweise Rhynchosporium secalis;
   Septoria-Arten, wie beispielsweise Septoria apii;
   Typhula-Arten, wie beispielsweise Typhula incarnata;
   Venturia-Arten, wie beispielsweise Venturia inaequalis;
Wurzel- und Stengelkrankheiten, hervorgerufen durch z.B.
   Corticium-Arten, wie beispielsweise Corticium graminearum;
   Fusarium-Arten, wie beispielsweise Fusarium oxysporum;
   Gaeumannomyces-Arten, wie beispielsweise Gaeumannomyces graminis;
   Rhizoctonia-Arten, wie beispielsweise Rhizoctonia solani;
   Tapesia-Arten, wie beispielsweise Tapesia acuformis;
   Thielaviopsis-Arten, wie beispielsweise Thielaviopsis basicola;
Ähren- und Rispenerkrankungen (inklusive Maiskolben), hervorgerufen durch z.B.
   Alternaria-Arten, wie beispielsweise Alternaria spp.;
   Aspergillus-Arten, wie beispielsweise Aspergillus flavus;
   Cladosporium-Arten, wie beispielsweise Cladosporium spp.;
   Claviceps-Arten, wie beispielsweise Claviceps purpurea;
   Fusarium-Arten, wie beispielsweise Fusarium culmorum;
   Gibberella-Arten, wie beispielsweise Gibberella zeae;
   Monographella-Arten, wie beispielsweise Monographella nivalis;
Erkrankungen, hervorgerufen durch Brandpilze wie z.B.
   Sphacelotheca-Arten, wie beispielsweise Sphacelotheca reiliana;
   Tilletia-Arten, wie beispielsweise Tilletia caries;
   Urocystis-Arten, wie beispielsweise Urocystis occulta;
   Ustilago-Arten, wie beispielsweise Ustilago nuda;
Fruchtfäule hervorgerufen durch z.B.
   Aspergillus-Arten, wie beispielsweise Aspergillus flavus;
   Botrytis-Arten, wie beispielsweise Botrytis cinerea;
   Penicillium-Arten, wie beispielsweise Penicillium expansum;
   Sclerotinia-Arten, wie beispielsweise Sclerotinia sclerotiorum;
   Verticilium-Arten, wie beispielsweise Verticilium alboatrum;
Samen- und bodenbürtige Fäulen und Welken, sowie Sämlingserkrankungen, hervorgerufen durch z.B.
   Fusarium-Arten, wie beispielsweise Fusarium culmorum;
   Phytophthora Arten, wie beispielsweise Phytophthora cactorum;
   Pythium-Arten, wie beispielsweise Pythium ultimum;
   Rhizoctonia-Arten, wie beispielsweise Rhizoctonia solani;
   Sclerotium-Arten, wie beispielsweise Sclerotium rolfsii;
Krebserkrankungen, Gallen und Hexenbesen, hervorgerufen durch z.B.
   Nectria-Arten, wie beispielsweise Nectria galligena;
Welkeerkrankungen hervorgerufen durch z.B.
   Monilinia-Arten, wie beispielsweise Monilinia laxa;
Deformationen von Blättern, Blüten und Früchten, hervorgerufen durch z.B.
   Taphrina-Arten, wie beispielsweise Taphrina deformans;
Degenerationserkrankungen holziger Pflanzen, hervorgerufen durch z.B.
   Esca-Arten, wie beispielsweise Phaemoniella clamydospora;
Blüten- und Samenerkrankungen, hervorgerufen durch z.B.
   Botrytis-Arten, wie beispielsweise Botrytis cinerea;
Erkrankungen von Pflanzenknollen, hervorgerufen durch z.B.
   Rhizoctonia-Arten, wie beispielsweise Rhizoctonia solani;
Erkrankungen, hervorgerufen durch bakterielle Erreger wie z.B.
   Xanthomonas-Arten, wie beispielsweise Xanthomonas campestris pv. oryzae; Pseudomonas-Arten, wie beispielsweise Pseudomonas syringae pv. lachrymans; Erwinia-Arten, wie beispielsweise Erwinia amylovora;

Bevorzugt können die folgenden Krankheiten von Soja-Bohnen bekämpft werden:

Pilzkrankheiten an Blättern, Stängeln, Schoten und Samen verursacht durch z.B.

Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassiicola)

Pilzkrankheiten an Wurzeln und der Stängelbasis verursacht durch z.B.
Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Die erfindungsgemäßen Zusammensetzungen die mindestens einen herbiziden Wirkstoff enthalten (= herbiziden Mittel) weisen eine ausgezeichnete herbizide Wirksamkeit gegen ein breites Spektrum wirtschaftlich wichtiger mono- und dikotyler Schadpflanzen auf. Dabei ist es gleichgültig, ob die Substanzen im Vorsaat-, Vorauflauf- oder Nachauflaufverfahren ausgebracht werden.

Im einzelnen seien beispielhaft einige Vertreter der mono- und dikotylen Unkrautflora genannt, die durch die erfindungsgemäßen Verbindungen kontrolliert werden können, ohne dass durch die Nennung eine Beschränkung auf bestimmte Arten erfolgen soll.

Auf der Seite der monokotylen Grasarten werden sowohl Ausfallgetreide wie Weizen, Gerste, Roggen und Triticale als auch z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfasst.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., Paphaver rhoeas spp., Centaurea spp. auf der annuellen Seite sowie Convolvulus, Cirsium, Rumex und Artemisia spp. bei den perennierenden Unkräutern.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Durch die erfindungsgemäßen Kombination von Wirkstoffen wird eine erhebliche Reduzierung der nötigen Aufwandmenge der Wirkstoffe ermöglicht.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf, einschließlich Arten die resistent sind gegen herbizide Wirkstoffe wie Glyphosate, Glufosinate, Atrazin oder Imidazolinon-Herbizide.

Obgleich die erfindungsgemäßen herbiziden Mittel eine ausgezeichnete herbizide Aktivität gegenüber mono- und dikotylen Schadpflanzen aufweisen, werden die Kulturpflanzen nur unwesentlich oder gar nicht geschädigt.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Des Weiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihrer herbiziden und pflanzenwachstumsregulatorischen Eigenschaften können die erfindungsgemäßen Mittel zur Bekämpfung von Schadpflanzen in gentechnisch veränderten oder durch Mutationsselektion erhaltenen Kulturpflanzen eingesetzt werden. Diese Kulturpflanzen zeichnen sich in der Regel durch besondere vorteilhafte Eigenschaften aus, wie Resistenzen gegenüber herbiziden Mitteln oder Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Erntegut hinsichtlich Menge, Qualität, Lagerfähigkeit, Zusammensetzung und spezieller Inhaltsstoffe. So sind z.B. transgene Pflanzen mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten (siehe z.B. US 5,162,602; US 4,761,373; US 4,443,971). Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659), gegen Glyphosate (Round-up Ready©-Sorten), gegen Glufosinate (LibertyLink©-Sorten) oder gegen Imidazolinone.
- transgene Rapspflanzen, z.B. Imidazolinon-resistente Rapssorten, Roundup Ready© Raps (RR-Raps) oder LibertyLink© Raps (LL-Raps).
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der oben genannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs (z.B. Schadpflanzen), vorzugsweise in Pflanzenkulturen wie Getreide (z.B. Weizen, Gerste, Roggen, Hafer, Kreuzungen davon wie Triticale, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, oder in dikotylen Kulturen, wobei man ein oder mehrere Herbizide des Typs (A) mit einem oder mehreren Herbiziden des Typs (B) gemeinsam oder getrennt, z.B. im Vorauflauf, Nachauflauf oder im Vor- und Nachauflauf, auf die Pflanzen, z.B. Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein.

Die erfindungsgemäßen herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen.

Die folgenden Herstellungs- und Anwendungsbeispiele erläutern die Erfindung, ohne sie in irgendeiner Weise zu beschränken.

### Herstellungsbeispiele

Zur Herstellung eines Suspensionskonzentrates werden erst alle flüssigen Komponenten miteinander vermischt. Im nächsten Schritt werden die Feststoffe zugegeben und so lange gerührt, bis eine homogene Suspension entsteht. Die homogene Suspension wird zunächst einer Grob- und dann einer Feinmahlung unterworfen, so dass man eine Suspension enthält, in der 90% der Feststoffpartikel eine Teilchengröße unterhalb von 10 µm aufweisen. Anschließend fügt man unter Rühren bei Raumtemperatur Kelzan® S und Wasser hinzu. Es wird ein homogenes Suspensionskonzentrat erhalten.

**Tabelle 1: Zusammensetzungen erfindungsgemäßer Formulierungen (Gew.-%)**

| | **Beispiel** | | | | | | | | | | |
|---|---|---|---|---|---|---|---|---|---|---|---|
| | 1 | 2 | 3 | 4 | 5 | 6 | 7 | 8 | 9 | 10 | 11 |
| Imidacloprid | | | | | 21,6 | | | | 4,4 | 11 | |
| Spirotetramat | 4,5 | 4,6 | 11 | 18,7 | | | 13,4 | 14,9 | 4,4 | 11 | |
| Tebuconazole | | | | | | | | | | | 17,8 |
| Thiacloprid | | | | | | 18,7 | 8,9 | 7,4 | | | |
| Atlox® 4913 | | | | | 4,5 | | 3 | 3 | 3 | 3 | 2,7 |
| Crovol® CR 70 G | 15 | 20 | 20 | 10 | 15 | 10 | 15 | 15 | 20 | 20 | 15 |
| Emulgator PS® 29 | 4 | 4 | 4 | 4 | | 4 | | | | | |
| Emulgator PS® 54 | | | | | 1,5 | | 5 | 5 | 3 | 3 | 1,5 |
| Glycerin | 10 | 10 | 10 | 10 | 10 | 10 | 10 | 10 | 10 | 10 | 10 |
| Kelzan® S | 0,3 | 0,2 | 0,1 | 0,2 | 0,1 | 0,2 | 0,2 | 0,2 | 0,4 | 0,4 | 0,1 |
| Morwet® D 425 | | | | | | | | | | | 0,5 |
| Preventol® D7 | 0,08 | 0,08 | 0,08 | 0,08 | 0,08 | 0,08 | 0,08 | 0,08 | 0,08 | 0,08 | 0,08 |
| Proxel® GXL | 0,12 | 0,12 | 0,12 | 0,12 | 0,12 | 0,12 | 0,12 | 0,12 | 0,12 | 0,12 | 0,12 |
| Silfoam® SRE | 0,1 | 0,1 | 0,1 | 0,1 | 0,1 | 0,1 | 0,1 | 0,1 | 0,1 | 0,1 | 0,1 |
| Zitronensäure | 0,1 | 0,1 | 0,1 | 0,1 | 0,1 | 0,1 | 0,1 | 0,1 | 0,1 | 0,1 | 0,1 |
| Wasser | 65,8 | 60,8 | 54,5 | 56,7 | 46,9 | 56,7 | 44,1 | 44,1 | 54,4 | 41,2 | 52 |

### Lagerstabilität der erfindungsgemäßen Formulierungen

Zur Untersuchung der Lagerstabilität wurden 100 ml Formulierung acht Wochen unter wechselnden Temperaturbedingungen (TW) und bei 54°C gelagert. Die wechselnden Temperaturbedingungen sind 48 Stunden bei 30 °C, Absenken der Temperatur in 22,5 Stunden mit 2 °C / Stunde bis - 15 °C, 75 Stunden bei - 15 °C, in 22,5 Stunden Erhöhen der Temperatur mit 2 °C / Stunde bis 30 °C. Anschließend an die Lagerung wird die Probe auf Raumtemperatur gebracht und Dispergierbarkeit, Partikelgröße und Viskosität werden überprüft.

Die Dispergierbarkeit (DISP) wird bestimmt nach der CIPAC MT 180 Methode, die Partikelgröße (d90, (Part)) wird gemessen auf einem Malvern Mastersizer 2000, und die dynamische Viskosität (Visk) wird bei 20 s⁻¹ auf einem RheoStress RS 150 der Firma Haake gemessen.

**Tabelle 2: Lagerstabilität der erfindungsgemäße Formulierungen**

| | Startwert | | | 8 Wochen 54°C | | | 8 Wochen TW | | |
|---|---|---|---|---|---|---|---|---|---|
| | DISP in % | Part in µm | Visk / mPas | DISP In % | Part in µm | Visk / mPas | DISP In % | Part in µm | Visk/mPas |
| Beispiel 1 | 0,1 | 4,2 | 202 | 0,1 | 5,6 | 174 | 0,1 | 4,4 | 193 |
| Beispiel 2 | 0,1 | 3,7 | 308 | 0,1 | 4,5 | 265 | 0,1 | 3,6 | 289 |
| Beispiel 3 | 0 | 3,8 | 308 | 0 | 4,5 | 265 | 0 | 3,6 | 289 |
| Beispiel 4 | 0,1 | 3,6 | 480 | 0,1 | 4,3 | 434 | 0,1 | 3,7 | 468 |
| Beispiel 5 | 0,1 | 3,1 | 583 | 0,1 | 4,6 | 261 | 0,1 | 5 | 282 |
| Beispiel 6 | 0.1 | 3,0 | 317 | 0,1 | 4,9 | 261 | 0,1 | 5,5 | 281 |
| Beispiel 7 | 0,1 | 3,6 | 786 | 0,1 | 3,6 | 712 | 0,1 | 3 | 791 |
| Beispiel 8 | 0,1 | 3,1 | 583 | 0,1 | 3,7 | 435 | 0,1 | 3 | 523 |
| Beispiel 9 | 0 | 2,7 | 526 | 0,1 | 3,3 | 344 | 0,1 | 2,5 | 436 |
| Beispiel 10 | 0 | 2,8 | 193 | 0,1 | 7,1 | 365 | | | |
| Beispiel 11 | | | | | | | | | |

### Bestimmung der statischen Oberflächespannung

Oberflächenspannung der erfindungsgemäßen Penetrationsförderer bei 0,5 g/l in Leitungswasser und Raumtemperatur gemessen mittels eine Krüss-Tensiometer K100 Wilhelmyplattenmethode nach ASTM D 1331-56.

**Tabelle 3: Oberflächenspannung der erfindungsgemäßen Penetrationsförderer**

| Penetrationsförderer | Oberflächenspannung in mN/m bei 20-22°C |
|---|---|
| Crovol® CR70G | 44,7 |
| Crovol® M70 | 43,7 |
| Crovol® A70UK | 42,0 |
| Crovol® PK70 | 40,4 |
| Agrimul® RSO 1503 | 45,9 |
| Agrimul® RSO 4003 | 41,8 |
| Wasser | 72,0 |

### Bestimmung der Pflanzenverträglichkeit verschiedener Adjuvantien

Pflanzenverträglichkeit der Penetrationsförderer (allein) bei 0,5 g/l in Leitungswasser auf empfindlichen Blättern von Minirosen. Pflanzen im Klimaschrank bei 20°C/60% Luftfeuchtigkeit bei Tag und 18°C/70% Luftfeuchtigkeit bei Nacht.

**Tabelle 4: Pflanzenverträglichkeit verschiedener Adjuvantien**

| Penetrationsförderer | | Nekrosen auf Rosenblätter* nach 1 Tag | Nekrosen auf Rosenblätter* nach 5 Tagen |
|---|---|---|---|
| *Erfindungsgemäß* | | | |
| Crovol® CR70G | | 0 | 0 |
| Crovol® M70 | | 0 | 0 |
| Crovol® A70UK | | 0 | 0 |
| Crovol® PK70 | | 0 | 0 |
| Agrimul® RSO 1503 | | 0 | 1 |
| Agrimul® RSO 4003 | | 1 | 0 |
| | | | |
| *Vergleich* | | | |
| Genapol® (Alkoholethoxylat) | C100 | 2 | 2 |
| Etocas® (Rhizinusethoxylat) | 10 | 1 | 1 |

| | | | |
|---|---|---|---|
| * 0 = keine Nekrose; 1 = leichte fleckenartige Nekrose auf der vom Tropfen benetzen Blattfläche, 2 = ringförmige Nekrose, 3 = maximale flächige Nekrose | | | |

Je Penetrationsförderer wurden auf eine Blattoberseite 4 x 10µl Tropfen aufgetragen, je zwei mal auf die beiden Blatthälften wie sie durch die Mittelader definiert werden. Es wurden mehrere Blätter der selben Pflanze benutzt. Als interner Standard auf typische Reaktion des Blattes wurde ausserdem im vorderen Drittel des Blattes Genapol C-100 aufgetragen, welches eine ringförmige Nekrose verursacht. Bei Applikation und Trocknung herrschte eine relative Luftfeuchtigkeit von 30-40% und eine Temperatur von ~21°C.

Die Auswertung erfolgte visuell per Auswerteschablone. Ausserdem wurden Aufnahmen mit einer Digitalkammera gemacht. Um die Gefahr auszuschließen, dass Spritzbeläge als Schäden identifiziert werden, sind alle Applikationsstellen mit Celluloseacetat gestrippt worden und eine weitere Bonitur wurde nach Entfernen des Spritzbelages gemacht.

### Bestimmung der Pflanzenverträglichkeit verschiedenen Spirotetramat / Adjuvant Kombinationen

Pflanzenverträglichkeit von Spritzbrühen mit dem Insektizid Spirotetramat (0.2 g/l) mit den Penetrationsförderern bei 0,5 g/l in Leitungswasser auf Blättern von Paprika (Capsicum annuum cv. Pusta Gold). Pflanzen im Klimaschrank bei 20°C/60% Luftfeuchtigkeit bei Tag und 18°C/70% Luftfeuchtigkeit bei Nacht.

**Tabelle 5: Pflanzenverträglichkeit Spirotetramat**

| BYI8330 (0.2 g/l) + Penetrationsförderer (0,5 g/l) | Nekrosen auf Paprikablätter* nach 1 Tag | Nekrosen auf Paprikablätter * nach 6 Tagen |
|---|---|---|
| *Erfindungsgemäß* | | |
| Crovol® CR70G | 0 | 0 |
| Crovol® M70 | 0 | 0 |
| Crovol® A70UK | 0 | 0 |
| Crovol® PK70 | 0 | 0 |
| Agrimul® RSO 1503 | 0 | 1 |
| Agrimul® RSO 4003 | 1 | 0 |
| | | |
| *Vergleich* | | |
| Genapol® C100 | 1 | 3 |
| Etucas® 10 | 0 | 2 |

| | | |
|---|---|---|
| * 0 = keine Nekrose; 1 = leichte fleckenartige Nekrose auf der vom Tropfen benetzen Blattfläche, 2 = ringförmige Nekrose, 3 = maximale flächige Nekrose | | |

Auf jedes Blatt wurden je Penetrationsförderer 2 x 10µl Tropfen aufgetragen je ein mal auf beide Blatthälften wie sie durch die Mittelader definiert werden. Es wurden mehrere Penetrationsförderer auf ein Blatt (Oberseite) appliziert und mehrere Blätter der selben Pflanze benutzt. Als interner Standard auf typische Reaktion des Blattes wurde ausserdem im vorderen Drittel des Blattes Genapol C-100 aufgetragen, welches eine ringförmige Nekrose verursacht. Bei Applikation und Trocknung herrschte eine relative Luftfeuchtigkeit von 30-40% und eine Temperatur von -21 °C.

Die Auswertung erfolgte visuell per Auswerteschablone. Auuserdem wurden Aufnahmen mit einer Digitalkammera gemacht. Um die Gefahr auszuschließen, dass Spritzbeläge als Schäden identifiziert werden, sind alle Applikationsstellen mit Celluloseacetat gestrippt worden und einer weitere Bonitur wurde nach Entfernen des Spritzbelages gemacht.

### Bestimmung der Pflanzenverträglichkeit verschiedener Tebuconazole / Penetrationsförderer Kombinationen

Pflanzenverträglichkeit auf Sojablättern von Tebuconazole formuliert als WG mit Rapsölmethylester-Penetrationsförderer (Mero®) und Crovol® CR70G.

**Tabelle 6: Pflanzenverträglichkeit Tebuconazole**

| Tebuconazole (0,5 g/l) + Penetrationsförderer (1 oder 3 g/l) | Nekrosen auf Sojablätter* nach 1 Tag | Nekrosen auf Sojablätter* nach 5 Tagen |
|---|---|---|
| *Vergleich* | | |
| + Mero® (1g/l) | 3 | 3 |
| + Mero® (3g/l) | 3 | 3 |
| | | |
| *Erfindungsgemäß* | | |
| Crovol® CR70G (1g/l) | 0 | 0 |
| Crovol® CR70G (3g/l) | 0 | 0 |

| | | |
|---|---|---|
| * 0 = keine Nekrose; 1 = leichte fleckenartige Nekrose auf der vom Tropfen benetzen Blattfläche, 2 = ringförmige Nekrose, 3 = maximale flächige Nekrose | | |

Auf jedes Blatt wurden je Penetrationsförderer 2 x 10µl Tropfen aufgetragen je ein mal auf beide Blatthälften wie sie durch die Mittelader definiert werden. Es wurden mehrere Penetrationsförderer auf ein Blatt (Oberseite) appliziert und mehrere Blätter der selben Pflanze benutzt. Bei Applikation und Trocknung herrschte eine relative Luftfeuchtigkeit von 30-40% und eine Temperatur von ~21°C.

Die Auswertung erfolgte visuell per Auswerteschablone. Auuserdem wurden Aufnahmen mit einer Digitalkammera gemacht. Um die Gefahr auszuschließen, dass Spritzbeläge als Schäden identifiziert werden, sind alle Applikationsstellen mit Celluloseacetat gestrippt worden und einer weitere Bonitur wurde nach Entfernen des Spritzbelages gemacht.

### Bestimmung der Kutikelpenetration verschiedener Spirotetramat / Penetrationsförderer Kombinationen

Penetration* von Spirotetramat mit erfindungsgemäßen Penetrationsförderern im Vergleich zur Kontrolle ohne Penetrationsförderer und einem schnellen Aufnahmeförderer Genapol® X150. Alle Penetrationsförderer eingesetzt bei 0,5 g/l.

**Tabelle 7: Aufnahme Spirotetramat durch Apfelblattkutikeln**

| Penetrationsförderer | % Penetration nach 24h ** | % Penetration nach 3 Tagen** |
|---|---|---|
| Kontrolle (ohne Addit.) | 0,1 | 0,3 |
| Genapol® X150 | 39,2 | 72 (n. 2 Tagen) |
| | | |
| Crovol® CR70G | 5,8 | 40,5 |
| Crovol® M70 | 12,4 | 62,5 |
| Crovol® A70UK | 11 | 53,7 |
| Crovol® PK70 | 4,1 | 15,4 |
| Agrimul® RSO 1503 | 2,9 | 13,2 |
| Agrimul® RSO 4003 | 3,1 | 15,8 |
| Etocas®*** 10 | 1,7 | 9,9 |
| Etocas®*** 35 | 0,9 | 7,8 |

| | | |
|---|---|---|
| * Wirkstoff gelöst bei 0.2 g/l in einem Gemisch aus Aceton/Leitungswasser (20/80) ** Mittelwerte aus 4-8 Wiederholungen für die Penetration durch Apfelblattkutikeln (T = 20°C, rel. Luftfeuchte 56%) *** Rhizinusethoxylat | | |

In diesem Test wurde die Penetration von Wirkstoffen durch enzymatisch isolierte Kutikeln von Apfelbaumblättern gemessen.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war.

Die Diffusionszellen waren mit einer 1%igen Phospholipidsuspension befüllt. Zur Bestimmung der Penetration wurden jeweils 10 µl der Spritzbrühe der nachstehenden Zusammensetzung mit radioaktiv markiertem Wirkstoff in den angegebenen Konzentrationen auf die Außenseite der Kutikula appliziert. Das Ansetzen der Spritzbrühe erfolgt mit lokalem Leitungswasser mittlerer Wasserhärte.

Nach dem Auftragen der Spritzbrühen ließ man das Wasser verdunsten, drehte die Kammern um und stellte sie in thermostatisierte Wannen, in denen die Temperatur und Luftfeuchte über der Kutikula durch einen leichten Luftstrom auf die Kutikula mit dem Spritzbelag einstellbar war (20°C, 60 % rh). In regelmäßigen Abständen wurden von einem Autosampler Aliquots entnommen und im Szintillationszähler gemessen.

### Bestimmung der Kutikelpentration verschiedener Wirkstoff / Penetrationsförderer Kombinationen

Förderung der Penetration verschiedener Wirkstoffe* durch erfindungsgemäße Penetrationsförderer am Beispiel von Crovol® CR70G im Vergleich zur Kontrolle.

**Tabelle 8: Aufnahme verschiedenre Wirkstoffe durch Apfelblattkutikeln**

| Wirkstoff ohne/mit Crovol® CR70G | % Penetration (nach Stunden)** | % Penetration (nach Stunden)** |
|---|---|---|
| Spirotetramat ohne | 0,1 (24) | 0,3 (72) |
| Spirotetramat mit 0,5 g/l Crovol® CR70G | 5,8 (24) | 40,5 (72) |
| | | |
| Tebuconazole ohne | <2 (24) | <2 (72) |
| Tebuconazole mit 0,5 g/l Crovol® CR70G | 6,0 (24) | 31,5 (72) |
| | | |
| Tembotrione ohne | <1(6) | <1(18) |
| Tembotrione mit 1,0 g/l Crovol® CR70G | 3,7 (6) | 11,2(18) |
| | | |
| Fluopicolide ohne | 0,8 (24) | 2.8 (48) |
| Fluopicolide mit 0,5 g/l Crovol® CR70G | 4,1 | 12,3 |
| | | |
| Imidacloprid ohne | 0,7 (24) | 2,2 (48) |
| Imidacloprid mit 0,45 g/l Crovol® CR70G (also 30%iges Absorbat für WG) | 31,1 (24) | 58,3 (48) |

| | | |
|---|---|---|
| * Wirkstoffe gelöst bei bei Konzentrationen von 0,1-0,5 g/l in Wasser oder einem Gemisch aus Aceton/Leitungswasser (20/80) ** Mittelwerte aus 4-8 Wiederholungen für die Penetration durch Apfelblattkutikeln (T = 20-25°C, rel. Luftfeuchte 56-60%) | | |

## Patentansprüche

1. In Wasser dispergierbare agrochemische Formulierungen, enthaltend
- mindestens einen bei Raumtemperatur festen agrochemische Wirkstoff und
- mindestens einen Penetrationsförderer aus der Klasse der Polyalkoxytriglyzeride.

2. Agrochemische Formulierung gemäß Anspruch 1 in Form eines Suspensionskonzentrates, enthaltend
- mindestens einen bei Raumtemperatur festen agrochemischen Wirkstoff,
- mindestens einen Penetrationsförderer aus der Klasse der Polyalkoxytriglyzeride, wobei das Triglyzerid pflanzlichen Ursprungs ist,
- mindestens ein nicht-ionisches Tensid und/oder mindestens ein anionisches Tensid und
- gegebenenfalls einen oder mehrere Zusatzstoffen aus den Gruppen der Frostschutzmittel, der schaumhemmenden Mittel, der Konservierungsmittel, der Antioxydantien, der Spreitmittel, der Farbstoffe und/oder der Verdicker.

3. Agrochemische Formulierung gemäß Anspruch 1 in Form eines wasserdispergierbaren Granulats , enthaltend
- mindestens einen bei Raumtemperatur festen agrochemischen Wirkstoff und
- mindestens einen Penetrationsförderers aus der Klasse der Polyalkoxytriglyzeride, wobei das Triglyzerid pflanzlichen Ursprungs ist,
- gegebenenfalls weitere Formulierhilfsmittel aus den Gruppen der Emulgiermittel, der Tenside, der schaumhemmenden Mittel, der Konservierungsmittel, der Antioxidantien, der Farbstoffe und/oder der inerten Füllmaterialien.

4. Agrochemische Formulierung gemäß einem der Ansprüche 1 bis 3, enthaltend als Wirkstoff mindestens einen Wirkstoff ausgewählt aus der Gruppe bestehend aus Tebuconazol, Prothioconazol, N-(3',4'-Dichlor-5-fluor-1,1'-biphenyl-2-yl)-3-(difluormethyl)-1-methyl-1*H-*pyrazol-4-carboxamid, N-{2-[3-chlor-5-(trifluormethyl)2-pyridinyl]ethyl}-2-(trifluormethyl)benzamid, Trifloxystrobin, Fluopicolid, Imidacloprid, Thiamethoxam, Clothianidin, Thiacloprid, Spirotetramat, Fipronil, Ethiprol, Thiencarbazone, Sulcotrione, Mesotrione, Tembotrione, Pyrasulfotole, Iodosulfuron, Mesosulfuron und Foramsulfuron.

5. Agrochemische Zusammensetzung gemäß einem oder mehreren der Ansprüche 1 bis 4, wobei der Penetrationsförderer das Ethoxylat von Rapsöl, Kornöl, Palmkernöl oder Mandelöl ist.

6. Verwendung einer Zusammensetzung nach einem oder mehreren der Ansprüche 1 bis 5 zur Bekämpfung von tierischen Schädlingen, phytopathogenen Pilzen oder erwünschtem Pflanzenwuchs, **dadurch gekennzeichnet, dass** eine wirksame Menge der enthaltenen Wirkstoffe auf unerwünschte Pflanzen, tierische Schädlinge, ihren Lebensraum oder Pflanzen appliziert wird.

7. Verfahren zur Bekämpfung von tierischen Schädlingen, **dadurch gekennzeichnet, dass** eine Zusammensetzung nach einem oder mehreren der Ansprüche 1 bis 5 enthaltend mindestens einen insektiziden Wirkstoff verdünnt oder unverdünnt so auf tierische Schädlinge oder ihren Lebensraum appliziert wird.

8. Verfahren zur Bekämpfung von phytopathogenen Pilzen oder unerwünschtem Pflanzenwuchs, **dadurch gekennzeichnet, dass** eine Zusammensetzung nach einem oder mehreren der Ansprüche 1 bis 5 enthaltend mindestens einen fungiziden oder herbiziden Wirkstoff verdünnt oder unverdünnt auf Pflanzen, Pflanzenteile, Pflanzensamen oder die Fläche, auf der die Pflanzen wachsen, appliziert wird.
